# EUROPÄISCHE PATENTSCHRIFT

(11) **EP 1 611 510 B1**
(45) Veröffentlichungstag und Bekanntmachung des Hinweises auf die Patenterteilung: **14.02.2007**
(21) Anmeldenummer: 04722267.4
(22) Anmeldetag: 22.03.2004
(51) Int. Cl.: G06F 11/14, G07F 7/10, G06F 1/00

(54) **KONTROLLIERTE AUSFÜHRUNG EINES FÜR EINE VIRTUELLE MASCHINE VORGESEHENEN PROGRAMMS AUF EINEM TRAGBAREN DATENTRÄGER**
CONTROLLED EXECUTION OF A PROGRAM USED FOR A VIRTUAL MACHINE ON A PORTABLE DATA CARRIER
EXECUTION CONTROLEE D'UN PROGRAMME PREVU POUR UNE MACHINE VIRTUELLE SUR UN SUPPORT DE DONNEES PORTABLE

(30) Priorität: 25.03.2003 DE 10313318
(43) Veröffentlichungstag der Anmeldung: 04.01.2006
(73) Patentinhaber: Giesecke & Devrient GmbH, 81677 München (DE)
(72) Erfinder: STOCKER, Thomas, 81825 München (DE)
(74) Vertreter: Dendorfer, Claus
(86) Internationale Anmeldenummer: PCT/EP2004/003004
(87) Internationale Veröffentlichungsnummer: WO 2004/086220

(56) Entgegenhaltungen:
- EP-A- 1 271 317
- GB-A- 2 353 113
- US-A- 5 488 716
- THANH NGUYEN: COTS JOURNAL, [Online] Dezember 2001 (2001-12), Seiten 14-20, XP002317390 Gefunden im Internet: URL:http://www.rtcgroup.com/cotsjournal/pd fs/2001/12/cots12-ruggedside.pdf> [gefunden am 2005-02-11]
- ROTENBERG E ED - INSTITUTE OF ELECTRICAL AND ELECTRONICS ENGINEERS: "AR-SMT: A MICROARCHITECTURAL APPROACH TO FAULT TOLERANCE IN MICROPROCESSORS" 29TH ANNUAL INTERNATIONAL SYMPOSIUM ON FAULT-TOLERANT COMPUTING. DIGEST OF PAPERS. (FTCS-29). MADISON, WI, JUNE 15 - 18, 1999, ANNUAL INTERNATIONAL SYMPOSIUM ON FAULT-TOLERANT COMPUTING, LOS ALMITOS, CA : IEEE COMP. SOC, US, 15. Juni 1999 (1999-06-15), Seiten 84-91, XP000873029 ISBN: 0-7803-5763-9

## Beschreibung

Die Erfindung betrifft allgemein das technische Gebiet der Ausführung eines für eine virtuelle Maschine vorgesehenen Programms auf einem tragbaren Datenträger, der einen Prozessor aufweist. Ein derartiger tragbarer Datenträger kann insbesondere eine Chipkarte in unterschiedlichen Bauformen oder ein Chipmodul sein. Spezieller betrifft die Erfindung die kontrollierte Programmausführung, um Störungen oder Angriffe zu erkennen und um zu verhindern, daß die Sicherheit des tragbaren Datenträgers durch solche Störungen oder Angriffe kompromittiert wird.

Tragbare Datenträger, die eine virtuelle Maschine zur Ausführung von Programmen aufweisen, sind z.B. unter der Marke *Java Card*^{™} bekannt. Solche Datenträger sind in Kapitel 5.10.2 des Buches "Handbuch der Chipkarten" von W. Rankl und W. Effing, Hanser Verlag, 3. Auflage, 1999, Seiten 261 - 281, beschrieben. Eine ausführliche Spezifikation des *Java-Card-*Standards, der dabei verwendeten virtuellen Maschine JCVM (*Java Card Virtual Machine*) und der ausgeführten Programme (*Java Card Applets*) findet sich auf den Internet-Seiten der Firma Sun Microsystems, Inc., unter *http:*//*java.sun. com*/*products*/*javacard.*

Tragbare Datenträger werden häufig für sicherheitskritische Anwendungen eingesetzt, beispielsweise im Zusammenhang mit Finanztransaktionen oder bei der elektronischen Signatur von Dokumenten. Es sind bereits Techniken zum Angriff auf tragbare Datenträger bekannt geworden, bei denen die Programmausführung durch externe Beeinflussung gestört wird. Eine solche Störung kann insbesondere durch Spannungsimpulse, Einwirkung von Wärme oder Kälte, elektrische oder magnetische Felder, elektromagnetische Wellen oder Teilchenstrahlung verursacht werden. So ist es z.B. möglich, durch Lichtblitze auf den freigelegten Halbleiterchip des tragbaren Datenträgers Registerinhalte im Prozessor oder Speicherinhalte zu verändern. Durch eine derartige Störung kann möglicherweise die Sicherheit des Datenträgers kompromittiert werden, wenn z.B. der Datenträger einen fehlerhaft verschlüsselten Text ausgibt, dessen Analyse Rückschlüsse auf einen geheimen Schlüssel zuläßt.

Es besteht daher das Problem, einen Datenträger der eingangs genannten Art gegen eine Kompromittierung durch Angriffe abzusichern, bei denen die Ausführung eines Programms durch eine virtuelle Maschine gestört wird.

Aus GB 2 353 113 A ist ein Computernetz bekannt, das Softwarefehler in gewissem Umfang auszugleichen vermag. Bei diesem Computernetz sind mindestens zwei Rechner vorgesehen, die je eine virtuelle Maschine ausführen. Wenn ein fehlerhafter Ablauf einer der virtuellen Maschinen festgestellt wird, wird die Programmausführung durch die andere virtuelle Maschine bzw. die anderen virtuellen Maschinen fortgesetzt.

Das aus GB 2 353113 A bekannte System ist gattungsfremd, da es nicht für einen tragbaren Datenträger, sondern für ein komplexes Netz mit mehreren Computern vorgesehen ist. Die virtuellen Maschinen werden von mehreren Prozessoren ausgeführt, die nur lose aneinander gekoppelt sind. Die Programmausführung wird auch bei einer Störung einer virtuellen Maschine fortgesetzt. Zur Anwendung bei einem tragbaren Datenträger mit einem einzigen Prozessor eignet sich diese Lehre nicht.

EP 1 271 317 offenbart einen tragbaren Datenträger, bei dem zwei Instanzen eines Programms ausgeführt und deren Betriebszustände auf Übereinstimmung überprüft, am bei einer Abweichung das Programm abzubrecken. Die Erfindung hat demgemäß die Aufgabe, die Probleme des Standes der Technik zumindest zum Teil zu vermeiden und eine Technik zur kontrollierten Ausführung eines für eine virtuelle Maschine vorgesehenen Programms auf einem tragbaren Datenträger bereitzustellen, durch die Sicherheitsrisiken bei einem Angriff oder einer Betriebsstörung vermieden werden. In bevorzugten Ausgestaltungen soll ein zuverlässiger Schutz bei möglichst geringen Leistungseinbußen des tragbaren Datenträgers erreicht werden.

Erfindungsgemäß wird diese Aufgabe ganz oder zum Teil gelöst durch ein Verfahren mit den Merkmalen des Anspruchs 1, einen tragbaren Datenträger mit den Merkmalen des Anspruchs 10 und ein Computerprogrammprodukt mit den Merkmalen des Anspruchs 11. Die abhängigen Ansprüche betreffen bevorzugte Ausgestaltungen der Erfindung.

Die Erfindung beruht auf der Grundidee, von dem einen Prozessor des tragbaren Datenträgers mehrere virtuelle Maschinen ausführen zu lassen, die ihrerseits ein und dasselbe Programm ausführen. Durch diese Maßnahme ergibt sich eine Redundanz bei der Programmausführung, die zur Erkennung von Fehlfunktionen eingesetzt werden kann. Es ist ein Teil der vorliegenden Erfindung, daß eine derartige Redundanz auch bei einem tragbaren Datenträger mit nur einem einzigen Prozessor erzielt werden kann.

Erfindungsgemäß wird die Ausführung des Programms abgebrochen, falls eine Abweichung der Betriebszustände der virtuellen Maschinen voneinander festgestellt wird. Es wird also nicht versucht, eine der virtuellen Maschinen als korrekt arbeitend zu identifizieren und die Programmausführung mit dieser virtuellen Maschine fortzusetzen. Durch den erfindungsgemäß vorgesehenen Programmabbruch wird eine besonders hohe Angriffssicherheit erreicht.

Die Erfindung bietet den erheblichen Vorteil, daß sie problemlos auf üblicher Hardware implementiert werden kann. Überdies ist keinerlei Anpassung des auszuführenden Programms an den erfindungsgemäßen Angriffsschutz erforderlich. Alle für die standardgemäße virtuelle Maschine vorgesehenen Programme laufen unverändert auf den erfindungsgemäß ausgestalteten Datenträgern, was die Akzeptanz der Erfindung sehr fördert.

Bei der Überprüfung der Betriebszustände der virtuellen Maschinen auf Übereinstimmung findet vorzugsweise kein vollständiger Vergleich statt. Vielmehr ist in bevorzugten Ausführungsformen lediglich ein Vergleich von Inhalten einiger wichtiger Register und/oder Speicherinhalten vorgesehen. Solche wichtigen Register können beispielsweise die Programmzähler und/oder die Stapelzeiger der virtuellen Maschinen sein. Als Beispiel für wichtige Speicherinhalte, die in manchen Ausgestaltungen der Erfindung miteinander verglichen werden, ist das jeweils jüngste ("oberste") Element in den Stapelspeichern der virtuellen Maschinen zu nennen.

Da die virtuellen Maschinen auf dem tragbaren Datenträger von einem einzigen Prozessor ausgeführt werden, erfolgt in der Regel ein ineinander verzahnter (*interleaved*) Programmablauf. Dies schließt jedoch nicht aus, daß einzelne Operationen echt parallel ausgeführt werden, wenn der Prozessor des tragbaren Datenträgers dazu eingerichtet ist.

Die Überprüfung der Betriebszustände der virtuellen Maschinen kann zu beliebigen Zeitpunkten erfolgen, an denen die virtuellen Maschinen - bei fehlerfreiem Ablauf - identische Zustände aufweisen müßten. Obwohl die Überprüfung also prinzipiell nicht an die Befehlsgrenzen des ausgeführten Programms gebunden ist, ist in bevorzugten Ausführungsformen vorgesehen, diese Überprüfung nach jeder Ausführung eines Befehls des Programms durch die virtuellen Maschinen vorzunehmen. In alternativen Ausgestaltungen kann der Abgleich der virtuellen Maschinen entweder schon nach der Ausführung von Teilen von Befehlen oder jeweils erst nach der Ausführung mehrerer Befehle erfolgen.

Vorzugsweise wird jeder Befehl des Programms zunächst von der ersten und dann von der zweiten virtuellen Maschine ausgeführt. In manchen Ausgestaltungen wird hierbei zunächst die Ausführung des Befehls von der ersten virtuellen Maschine beendet, bevor der Prozessor des tragbaren Datenträgers mit der Ausführung des Befehls durch die zweite virtuelle Maschine beginnt. In anderen Ausgestaltungen kann der Prozessor dagegen mehrere Teilabschnitte des Befehls jeweils zunächst auf der ersten und dann auf der zweiten virtuellen Maschine ausführen, sofern nur die erste virtuelle Maschine nicht gegenüber der zweiten virtuellen Maschine ins Hintertreffen gerät.

Durch den Einsatz von mindestens zwei - in manchen Ausführungsformen auch mehr - virtuellen Maschinen verringert sich die für jede virtuelle Maschine bereitstehende Rechenleistung entsprechend. Hinsichtlich der tatsächlichen Programmlaufzeit ist jedoch zu berücksichtigen, daß bei einem typischen tragbaren Datenträger viel Zeit für Schreibvorgänge in einen nicht-flüchtigen Speicher des Datenträgers benötigt wird.

Die Erfindung sicht deshalb vor, daß die virtuellen Maschinen auf einen gemeinsamen Heap (Haufen oder Halde) im nicht-flüchtigen Speicher des tragbaren Datenträgers zugreifen, wobei Schreibvorgänge nur von einer der virtuellen Maschinen ausgeführt werden. Die andere virtuelle Maschine oder die anderen virtuellen Maschinen kann/können entweder den Schreibvorgang ganz überspringen oder statt des Schreibvorgangs überprüfen, ob an der zu beschreibenden Stelle im Speicher bereits der einzuschreibende Wert enthalten ist. Falls das auszuführende Programm viele Schreibvorgänge in den Heap enthält, benötigen diese einen wesentlichen Teil der Gesamtlaufzeit. Durch den Einsatz der gerade beschriebenen Ausführungsform der Erfindung bleibt dieser Teil der Gesamtlaufzeit unverändert, während nur die reine Rechenzeit des Prozessors - die, wie erwähnt, weniger ins Gewicht fällt - ansteigt.

Der erfindungsgemäße tragbare Datenträger ist vorzugsweise als Chipkarte oder Chipmodul ausgebildet. Das erfindungsgemäße Computerprogrammprodukt weist Programmbefehle auf, um das erfindungsgemäße Verfahren zu implementieren. Ein derartiges Computerprogrammprodukt kann ein körperliches Medium sein, beispielsweise ein Halbleiterspeicher oder eine Diskette oder eine CD-ROM, auf dem ein Programm zur Ausführung eines erfindungsgemäßen Verfahrens gespeichert ist. Das Computerprogrammprodukt kann jedoch auch ein nicht-körperliches Medium sein, beispielsweise ein über ein Computernetzwerk übermitteltes Signal. Das Computerprogrammprodukt kann insbesondere zur Verwendung im Zusammenhang mit der Herstellung und/ oder Initialisierung und/ oder Personalisierung von Chipkarten oder sonstigen Datenträgern vorgesehen sein.

In bevorzugten Ausgestaltungen weisen der Datenträger und/oder das Computerprogrammprodukt Merkmale auf, die den oben beschriebenen und/ oder den in den abhängigen Verfahrensansprüchen genannten Merkmalen entsprechen.

Weitere Merkmale, Vorteile und Aufgaben der Erfindung gehen aus der folgenden genauen Beschreibung eines Ausführungsbeispiels und mehrerer Ausführungsalternativen hervor. Es wird auf die schematischen Zeichnungen verwiesen, in denen zeigen:
Fig. 1 ein Blockdiagramm mit Funktionseinheiten eines tragbaren Datenträgers nach einem Ausführungsbeispiel der Erfindung,
Fig. 2 eine konzeptuelle Darstellung von Komponenten, die bei der Programmausführung durch den tragbaren Datenträger aktiv sind,
Fig. 3 ein Flußdiagramm einer während der Programmausführung für jeden Programmbefehl durchlaufenen Hauptschleife, und
Fig. 4 ein Flußdiagramm der Überprüfung der Betriebszustände der virtuellen Maschinen auf Übereinstimmung.

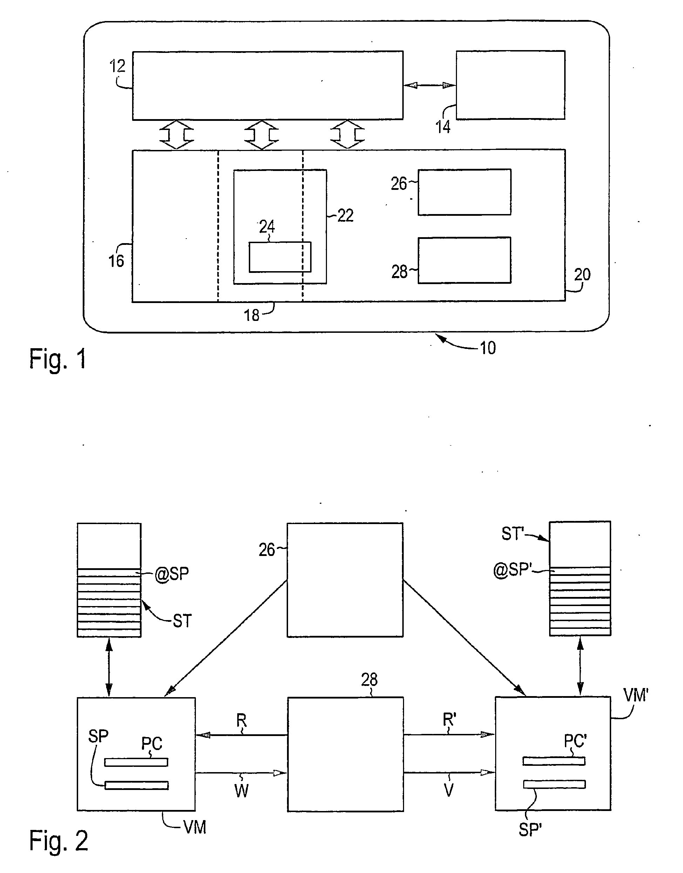

Der in Fig. 1 dargestellte Datenträger 10 ist im vorliegenden Ausführungsbeispiel als Chipkarte gemäß dem *Java-Card-*Standard ausgestaltet. Der Datenträger weist auf einem einzigen Halbleiterchip einen Prozessor 12, mehrere in unterschiedlichen Technologien ausgestaltete Speicherfelder und eine Schnittstellenschaltung 14 zur kontaktlosen oder kontaktgebundenen Kommunikation auf. Im vorliegenden Ausführungsbeispiel sind als Speicherfelder ein Arbeitsspeicher 16, ein Festwertspeicher 18 und ein nicht-flüchtiger Speicher 20 vorgesehen. Der Arbeitsspeicher 16 ist als RAM, der Festwertspeicher 18 als maskenprogrammiertes ROM und der nicht-flüchtige Speicher 20 als elektrisch lösch- und programmierbares EEPROM ausgestaltet. Schreibzugriffe auf den nicht-flüchtigen Speicher 20 sind relativ aufwendig und benötigen beispielsweise die dreißigfache Zeit eines Lesezugriffs.

Im Festwertspeicher 18 - und zum Teil auch im nicht-flüchtigen Speicher 20 - ist ein Betriebssystem 22 enthalten, das eine Vielzahl von Funktionen und Diensten bereitstellt. Unter anderem weist das Betriebssystem 22 ein Codemodul 24 auf, das eine virtuelle Maschine - im vorliegenden Ausführungsbeispiel eine JCVM (*Java Card Virtual Machine*) - implementiert.

In Fig. 1 ist beispielhaft ein auszuführendes Programm 26 im nicht-flüchtigen Speicher 20 gezeigt, das im vorliegenden Ausführungsbeispiel als *Java Card Applet* ausgestaltet ist. Das Programm 26 kann auch ganz oder teilweise im Festwertspeicher 18 enthalten sein, und es können weitere Programme zur Ausführung durch den tragbaren Datenträger 10 vorgesehen sein. Ein Bereich im nicht-flüchtigen Speicher 20 ist als Heap 28 (Haufen oder Halde) reserviert, um während der Programmausführung Objekte und andere Datenstrukturen aufzunehmen.

Um das Programm 26 auszuführen, startet der Prozessor 12 unter Steuerung des Betriebssystems 22 zwei Instanzen des Codemoduls 24, die je eine virtuelle Maschine VM, VM' bilden. Wie in Fig. 2 dargestellt ist, führen die beiden virtuellen Maschinen VM, VM' ein und dasselbe Programm 26 aus, das im nicht-flüchtigen Speicher 20 nur einmal vorliegt. Die beiden virtuellen Maschinen VM, VM' greifen daher, wenn sie einen Befehl des Programms 26 holen, auf identische Adressen im nicht-flüchtigen Speicher 20 zu.

Die beiden virtuellen Maschinen VM, VM' führen während des Programmablaufs Zugriffsoperationen auf den gemeinsamen Heap 28 aus. Auch hier sind die im Heap 28 gespeicherten Objekte und Datenstrukturen jeweils nur einmal vorhanden. Die erste virtuelle Maschine VM führt auf dem Heap 28 sowohl Leseoperationen R als auch Schreiboperationen W aus. Die zweite virtuelle Maschine VM' führt dagegen zwar Leseoperationen R' aus, aber keine Schreiboperationen, sondern Verifikationsoperationen V.

Die virtuellen Maschinen VM, VM' weisen jeweils eigene Register auf, von denen in Fig. 2 je ein Programmzähler PC, PC' und ein Stapelzeiger SP, SP' gezeigt sind. Diese Register sind im Arbeitsspeicher 16 angelegt oder werden durch Register des Prozessors 12 implementiert. Ferner weist jede virtuelle Maschine VM, VM' einen eigenen Stapelspeicher ST, ST' auf, der in je einem Bereich des Arbeitsspeichers 16 angelegt ist. Die jeweils jüngsten ("obersten") Einträge in den Stapelspeichern ST, ST', auf die die jeweiligen Stapelzeiger SP, SP' verweisen, sind in Fig. 2 durch @SP und @SP' gekennzeichnet.

In einer Abwandlung zu der in Fig. 1 gezeigten Darstellung können die virtuellen Maschinen VM, VM' hardwaremäßig getrennt in separaten Speichern 20 angelegt sein, die weiterhin separaten Prozessoren zugeordnet sein können. Vorgesehen sein kann auch, daß die virtuellen Maschinen VM, VM' als Hardwarebauelemente ausgeführt sind.

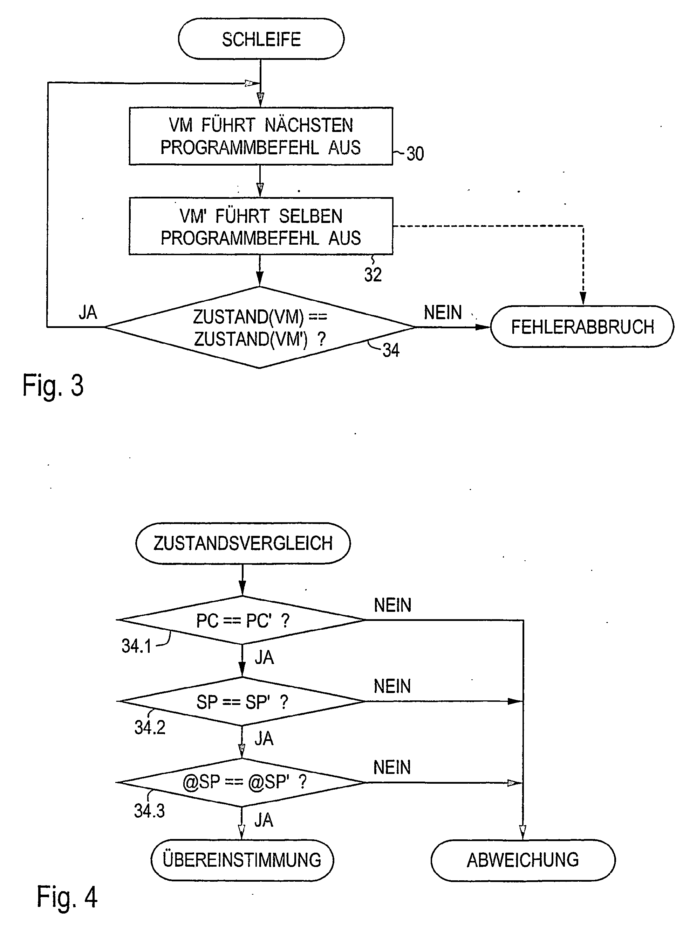

Bei der Ausführung des Programms 26 führt das Betriebssystem 22 die in Fig. 3 gezeigte Schleife aus. Für jeden Befehl des Programms 26 erfolgt ein Schleifendurchlauf. Der Befehl wird zunächst in Schritt 30 von der ersten virtuellen Maschine VM ausgeführt. Hierbei bestehen im Vergleich zu der Programmausführung bei einem System nach dem Stand der Technik durch eine einzige virtuelle Maschine keine Unterschiede. Insbesondere verwaltet die erste virtuelle Maschine ihre Register PC und SP sowie den Stapelspeicher ST und führt gegebenenfalls eine Leseoperation R und/oder eine Schreiboperation W auf dem Heap 28 durch.

Wenn die Befehlsausführung durch die erste virtuelle Maschine VM abgeschlossen ist, führt die zweite virtuelle Maschine VM' in Schritt 32 denselben Befehl des Programms 26 nochmals aus. Auch hier erfolgen die Verwaltung der Register PC' und SP', die Verwaltung des Stapelspeichers ST' sowie gegebenenfalls eine Operation R' des Lesens vom Heap 28 auf übliche Weise.

Die Befehlsausführung durch die zweite virtuelle Maschine VM' unterscheidet sich jedoch von der Befehlsausführung durch die erste virtuelle Maschine VM dadurch, daß statt einer durch den Befehl gegebenenfalls vorgegebenen Schreiboperation eine Vergleichsoperation V ausgeführt wird, bei der der eigentlich in den Heap 28 zu schreibende Wert mit dem aktuellen Inhalt des Heaps 28 an der zu beschreibenden Adresse verglichen wird. Wenn die Berechnungsvorgänge der beiden virtuellen Maschinen VM, VM' übereinstimmen, dann hat die erste virtuelle Maschine VM in Schritt 30 den nun in Schritt 32 von der zweiten virtuellen Maschine VM' bestimmten Wert bereits in den Heap 28 eingeschrieben. Die Verifikationsoperation V in Schritt 32 ergibt daher eine Übereinstimmung, und der Berechnungsablauf wird fortgesetzt. Wird in Schritt 32 dagegen eine Abweichung der Werte festgestellt, so deutet dies auf eine Fehlfunktion einer der virtuellen Maschinen VM, VM' hin. Die Programmausführung wird dann als fehlerhaft abgebrochen. Diese Möglichkeit ist in Fig. 3 durch einen gestrichelten Pfeil angedeutet.

Nach der Ausführung des Programmbefehls durch beide virtuellen Maschinen VM, VM' wird nun in Schritt 34 geprüft, ob die erreichten Betriebszustände der beiden virtuellen Maschinen übereinstimmen. Dazu werden im hier beschriebenen Ausführungsbeispiel nur einige Register- und Speicherwerte auf Übereinstimmung geprüft, wie dies in Fig. 4 gezeigt ist. Zunächst wird in Teilschritt 34.1 überprüft, ob die beiden Programmzähler PC, PC' nach der Befehlsausführung denselben Wert aufweisen. Ist dies der Fall, so erfolgt in Teilschritt 34.2 eine Überprüfung der beiden Stapelzeiger SP, SP' auf Übereinstimmung. Wenn auch dieser Test erfolgreich ist, wird in Teilschritt 34.3 überprüft, ob die jeweils jüngsten Einträge @SP, @SP' in den Stapelspeichern ST, ST', also die Einträge, auf die die Stapelzeiger SP, SP' verweisen, identisch sind.

Wenn bei allen drei Abfragen 34.1, 34.2, 34.3 eine Übereinstimmung festgestellt worden ist, so wird in Schritt 34 (Fig. 3) von einer korrekten Programmausführung durch die beiden virtuellen Maschinen VM, VM' ausgegangen. Es erfolgt dann ein Rücksprung zum Anfang der Schleife, und der nächste Befehl des Programms 26 wird zunächst durch die erste und dann durch die zweite virtuelle Maschine VM, VM' ausgeführt.

Ergibt sich bei der Zustandsüberprüfung in einem der drei Teilschritte 34.1, 34.2, 34.3 jedoch eine Abweichung, so deutet dies auf eine Fehlfunktion einer der beiden virtuellen Maschinen VM, VM' hin. Dies wiederum wird als Indiz für eine Störung oder einen Angriff auf die Hardware des tragbaren Datenträgers 10 erachtet. Da der Prozessor 12 die Schritte 30 und 32 streng nacheinander ausführt, ist bei einem Angriff z.B. durch einen Lichtblitz nur die Funktion einer der beiden virtuellen Maschinen VM, VM' betroffen. Selbst bei rasch aufeinanderfolgenden Lichtblitzen wäre es unwahrscheinlich, daß beide virtuellen Maschinen VM, VM' in gleicher Weise gestört werden würden.

Wird in Schritt 34 eine Abweichung der Betriebszustände festgestellt, so wird die Programmausführung als fehlerhaft abgebrochen. Das Betriebssystem 22 bringt dann den Datenträger 10 in einen sicheren Zustand. Hierbei ist insbesondere zu beachten, daß der Datenträger 10 nach einem Programmabbruch keine Ausgabeoperationen mehr durchführen soll. Je nach den an den Datenträger 10 gestellten Sicherheitsanforderungen kann vorgesehen sein, daß der Datenträger 10 nach einem regulären Rücksetzvorgang (*reset*) wieder einsatzbereit ist, oder es kann ein besonderer Freischaltvorgang gefordert werden, oder der Datenträger 10 kann gänzlich deaktiviert werden.

## Patentansprüche

1. Verfahren zur kontrollierten Ausführung eines für eine virtuelle Maschine (VM, VM') vorgesehenen Programms (26) auf einem tragbaren Datenträger (10), beidem
- der Datenträger (10) einen Prozessor (12) aufweist, der mindestens eine erste und eine zweite virtuelle Maschine (VM, VM') ausführt,
- das Programm (26) sowohl von der ersten als auch von der zweiten virtuellen Maschine (VM, VM') ausgeführt wird,
- die erste und die zweite virtuelle Maschine (VM, VM') auf einen gemeinsamen Heap (28) in einem nicht-flüchtigen Speicher (20) des Datenträgers (10) zugreifen, wobei Schreibvorgäuge nur von einer der virtuellen Maschinen ausgeführt werden,
- der Betriebszustand der ersten virtuellen Maschine (VM) und der Betriebszustand der zweiten virtuellen Maschine (VM') während der Ausführung des Programms (26) auf Übereinstimmung überprüft werden, und
- die Ausführung des Programms (26) abgebrochen wird, falls eine Abweichung des Betriebszustands der ersten virtuellen Maschine (VM) von dem Betriebszustand der zweiten virtuellen Maschine (VM') festgestellt wird.

2. Verfahren nach Anspruch 1, **dadurch gekennzeichnet, daß** die Überprüfung des Betriebszustands der ersten virtuellen Maschine (VM) und des Betriebszustand der zweiten virtuellen Maschine (VM') auf Übereinstimmung eine Überprüfung umfaßt, ob der Stand eines Programmzählers (PC) der ersten virtuellen Maschine (VM) gleich dem Stand eines Programmzählers (PC') der zweiten virtuellen Maschine (VM') ist.

3. Verfahren nach Anspruch 1 oder Anspruch 2, **dadurch gekennzeichnet, daß** die Überprüfung des Betriebszustands der ersten virtuellen Maschine (VM) und des Betriebszustand der zweiten virtuellen Maschine (VM') auf Übereinstimmung eine Überprüfung umfaßt, ob der Stand eines Stapelzeigers (SP) der ersten virtuellen Maschine (VM) gleich dem Stand eines Stapelzeigers (SP') der zweiten virtuellen Maschine (VM') ist.

4. Verfahren nach einem der Ansprüche 1 bis 3, **dadurch gekennzeichnet, daß** die Überprüfung des Betriebszustands der ersten virtuellen Maschine (VM) und des Betriebszustand der zweiten virtuellen Maschine (VM') auf Übereinstimmung eine Überprüfung umfaßt, ob der Wert des jüngsten Elements (@SP) in einem der ersten virtuellen Maschine (VM) zugeordneten Stapelspeicher (ST) gleich dem Wert des jüngsten Elements (@SP') in einem der zweiten virtuellen Maschine (VM') zugeordneten Stapelspeicher (ST') ist.

5. Verfahren nach einem der Ansprüche 1 bis 4, **dadurch gekennzeichnet, daß** die Überprüfung des Betriebszustands der ersten virtuellen Maschine (VM) und des Betriebszustand der zweiten virtuellen Maschine (VM') auf Übereinstimmung jeweils vorgenommen wird, nachdem ein Befehl des Programms (26) sowohl von der ersten als auch von der zweiten virtuellen Maschine (VM, VM') ausgeführt worden ist.

6. Verfahren nach Anspruch 1, **dadurch gekennzeichnet, daß** bei der Ausführung eines Befehls des Programms (26), der einen Schreibvorgang auf den gemeinsamen Heap (28) beinhaltet, der Schreibvorgang nur von der ersten virtuellen Maschine (VM) ausgeführt wird.

7. Verfahren nach Anspruch 6, **dadurch gekennzeichnet, daß** der Befehl des Programms (26) zuerst von der ersten virtuellen Maschine (VM) und dann von der zweiten virtuellen Maschine (VM') ausgeführt wird, und daß die zweite virtuelle Maschine (VM') statt des Schreibvorgangs überprüft, ob im Heap (28) an der zu beschreibenden Stelle der einzuschreibende Wert enthalten ist.

8. Verfahren nach einem der Ansprüche 1 bis 7, **dadurch gekennzeichnet, daß** das Programm (26) ein *Java Card Applet* ist, das zur Ausführung durch eine JCVM (*Java Card Virtual Machine*) vorgesehen ist.

9. Tragbarer Datenträger (10), insbesondere Chipkarte oder Chipmodul, mit einem Prozessor (12) und einem Betriebssystem (22), wobei das Betriebssystem (22) Programmbefehle aufweist, um den Prozessor (12) zur Ausführung eines Verfahrens nach einem der Ansprüche 1 bis 8 zu veranlassen.

10. Computerprogrammprodukt, das Programmbefehle aufweist, um einen Prozessor (12) eines tragbaren Datenträgers (10) zu veranlassen, ein Verfahren mit den Merkmalen eines der Ansprüche 1 bis 8 auszuführen.

## Claims

1. A method for the controlled execution of a program (26), the program (26) being intended for a virtual machine (VM, VM'), on a portable data carrier (10), wherein
- the data carrier (10) has a processor (12) which executes at least a first and a second virtual machine (VM, VM'),
- the program (26) is executed both by the first and by the second virtual machine (VM, VM'),
- the first and the second virtual machine (VM, VM') access a common heap (28) in a non-volatile memory (20) of the data carrier (10), wherein write operations are only executed by one of the virtual machines,
- the operating state of the first virtual machine (VM) and the operating state of the second virtual machine (VM') are checked during execution of the program (26) for correspondence, and
- execution of the program (26) is aborted if a difference is found between the operating state of the first virtual machine (VM) and the operating state of the second virtual machine (VM').

2. A method according to claim 1, **characterised in that** checking of the operating state of the first virtual machine (VM) and of the operating state of the second virtual machine (VM') for correspondence comprises checking whether the state of a program counter (PC) of the first virtual machine (VM) is the same as the state of a program counter (PC') of the second virtual machine (VM').

3. A method according to claim 1 or claim 2, **characterised in that** checking of the operating state of the first virtual machine (VM) and of the operating state of the second virtual machine (VM') for correspondence comprises checking whether the level of a stack pointer (SP) of the first virtual machine (VM) is the same as the level of a stack pointer (SP') of the second virtual machine (VM').

4. A method according to any one of claims 1 to 3, **characterised in that** checking of the operating state of the first virtual machine (VM) and the operating state of the second virtual machine (VM') for correspondence comprises checking whether the value of the most recent element (@SP) in a stack (ST) associated with the first virtual machine (VM) is the same as the value of the most recent element (@SP') in a stack (ST') associated with the second virtual machine (VM').

5. A method according to any one of claims 1 to 4, **characterised in that** checking of the operating state of the first virtual machine (VM) and of the operating state of the second virtual machine (VM') for correspondence is in each case performed after an instruction of the program (26) has been executed both by the first and by the second virtual machine (VM, VM').

6. A method according to claim 1, **characterised in that**, when an instruction of the program (26) that contains a write operation to the common heap (28) is being executed, the write operation is performed only by the first virtual machine (VM).

7. A method according to claim 6, **characterised in that** the instruction of the program (26) is executed first by the first virtual machine (VM) and then by the second virtual machine (VM'), and, instead of performing the write operation, the second virtual machine (VM') checks whether the value that is to be written is present in the heap (28) at the location that is to be written to.

8. A method according to any one of claims 1 to 7, **characterised in that** the program (26) is a *Java Card Applet* intended for execution by a JCVM (*Java Card Virtual Machine*).

9. A portable data carrier (10), in particular a chip card or a chip module, having a processor (12) and an operating system (22), wherein the operating system (22) has program instructions for causing the processor (12) to perform a method according to any one of claims 1 to 8.

10. A computer program product having program instructions for causing a processor (12) of a portable data carrier (10) to perform a method having the features of any one of claims 1 to 8.

## Revendications

1. Procédé pour l'exécution contrôlée d'un programme (26) prévu pour une machine (VM, VM') virtuelle sur un support de données (10) portatif,
- les deux supports de données (10) présentant un processeur (12) qui met en oeuvre au moins une première et une seconde machines (VM, VM') virtuelles,
- le programme (26) étant exécuté aussi bien par la première que par la seconde machines (VM, VM') virtuelles,
- la première et la seconde machines (VM, VM') virtuelles ayant recours à un Heap (28) commun dans une mémoire (20) non-volatile du support de données (10), des opérations d'écriture n'étant exécutées que par l'une des machines virtuelles,
- l'état de service de la première machine (VM) virtuelle et l'état de service de la seconde machine (VM') virtuelle étant contrôlés au niveau de la concordance pendant l'exécution du programme (26), et
- l'exécution du programme (26) étant interrompue dans le cas où un écart de l'état de service de la première machine virtuelle (VM) par rapport à l'état de service de la seconde machine (VM') virtuelle est constaté.

2. Procédé selon la revendication 1, **caractérisé en ce que** le contrôle de l'état de service de la première machine (VM) virtuelle et de l'état de service de la seconde machine (VM') virtuelle comprend un contrôle de concordance pour savoir si l'indication d'un compteur d'instructions (PC) de la première machine (VM) virtuelle est identique à l'indication d'un compteur d'instructions (PC') de la seconde machine (VM') virtuelle.

3. Procédé selon la revendication 1 ou la revendication 2, **caractérisé en ce que** le contrôle de l'état de service de la première machine (VM) virtuelle et de l'état de service de la seconde machine (VM') virtuelle comprend un contrôle de la concordance pour savoir si l'indication d'un pointeur de pile (SP) de la première machine (VM) virtuelle est identique à l'indication d'un pointeur de pile (SP') de la seconde machine (VM') virtuelle.

4. Procédé selon l'une quelconque des revendications 1 à 3, **caractérisé en ce que** le contrôle de l'état de service de la première machine (VM) virtuelle et de l'état de service de la seconde machine (VM') virtuelle comprend un contrôle de concordance pour savoir si la valeur de l'élément (@SP) le plus jeune dans une mémoire de pile (ST) attribuée à la première machine (VM) virtuelle est égale à la valeur de l'élément (@SP') le plus jeune dans une mémoire de pile (ST') attribuée à la seconde machine (VM') virtuelle.

5. Procédé selon l'une quelconque des revendications 1 à 4, **caractérisé en ce que** le contrôle de l'état de service de la première machine (VM) virtuelle et de l'état de service de la seconde machine (VM') virtuelle au niveau de la concordance est effectué à chaque fois après qu'une instruction du programme (26) a été exécutée aussi bien par la première que par la seconde machines (VM, VM') virtuelles.

6. Procédé selon la revendication 1, **caractérisé en ce que**, lors de l'exécution d'une instruction du programme (26), qui contient une opération d'écriture sur le Heap (28) commun, l'opération d'écriture n'est exécutée que par la première machine (VM) virtuelle.

7. Procédé selon la revendication 6, **caractérisé en ce que** l'instruction du programme (26) est exécutée d'abord par la première machine (VM) et ensuite par la seconde machine (VM') virtuelle, et **en ce que** la seconde machine (VM') virtuelle vérifie au lieu de l'opération d'écriture si la valeur à enregistrer est incluse dans le Heap (28) à l'emplacement à décrire.

8. Procédé selon l'une quelconque des revendications 1 à 7, **caractérisé en ce que** le programme (26) est un Java Card Applet, qui est prévu pour l'exécution par une JCVM (Java Card Virtual Machine).

9. Support de données (10) portatif, en particulier carte à puce ou module à puce, comprenant un processeur (12) et un système d'exploitation (22), le système d'exploitation (22) présentant des instructions de programme pour ordonner au processeur (12) l'exécution d'un procédé selon l'une quelconque des revendications 1 à 8.

10. Produit de programme d'ordinateur, qui présente des instructions de programme pour ordonner à un ordinateur (12) d'un support de données (10) portatif d'exécuter un procédé présentant les caractéristiques de l'une des revendications 1 à 8.
